# EUROPÄISCHE PATENTSCHRIFT

(11) **EP 2 874 266 B1**
(45) Veröffentlichungstag und Bekanntmachung des Hinweises auf die Patenterteilung: **19.06.2019**
(21) Anmeldenummer: 14190987.9
(22) Anmeldetag: 30.10.2014
(51) Int. Cl.: H02J 3/32, H02J 7/35, H02S 40/30, H02J 3/38, G05F 1/67

(54) **Fotovoltaiksystem und Verfahren zum Betreiben eines Fotovoltaiksystems**
Photovoltaic system and method for operating same
Système photovoltaïque et procédé de fonctionnement d'un système photovoltaïque

(30) Priorität: 14.11.2013 DE 102013223167
(43) Veröffentlichungstag der Anmeldung: 20.05.2015
(73) Patentinhaber: SMA Solar Technology AG, 34266 Niestetal (DE)
(72) Erfinder: Schmiegel, Armin Uwe, 22609 Hamburg (DE)
(74) Vertreter: Lahnor, Peter

(56) Entgegenhaltungen:
- DE-A1-102011 054 971
- US-A1- 2011 273 022
- US-A1- 2012 228 942
- US-B1- 7 629 708

## Beschreibung

### Stand der Technik

Der hier vorgestellte Ansatz bezieht sich auf ein Wechselrichtermodul, auf ein Fotovoltaiksystem sowie auf ein Verfahren zum Betreiben eines Fotovoltaiksystems.

Durch eine elektrische Reihenschaltung von Solarzellen variiert eine erreichbare elektrische Spannung am Wechselrichter. Um verlustarm zu funktionieren, werden die Komponenten des Gesamtsystems aufeinander abgestimmt.

Die DE 10 2010 000 350 A1 beschreibt ein Energieversorgungssystem mit regenerativer Stromquelle und ein Verfahren zum Betrieb eines Energieversorgungssystems.

In der DE 10 2011 054 971 A1 ist ein Verfahren zum Steuern einer Photovoltaikanlage und ein Wechselrichter mit einer Steuerung zum Umsetzen des Verfahrens offenbart, welche die Funktionalität einer Photovoltaikanlage erhöhen, die Verdienstmöglichkeiten des Betreibers der Photovoltaikanlage verbessern und einen aktiven Beitrag zur Netzunterstützung leisten. Die US 7 629 708 B1 zeigt eine redundante Stromversorgung mit einer Photovoltaikanlage. In der US 2011 0273022A1 ist ein Verfahren und eine Vorrichtung zum Steuern eines hybriden elektrischen Energieversorgungssystems gezeigt.

Die US 2012 0228942 A1 offenbart ein elektrisches Energieerzeugungssystem mit einer Batterie sowie eine Vorrichtung und ein Verfahren zur Steuerung der Batterie.

### Offenbarung der Erfindung

Bei dem hier vorgestellten Ansatz werden ein Wechselrichtermodul, ein modulares Fotovoltaiksystem sowie ein Verfahren zum Betreiben des modularen Fotovoltaiksystems gemäß den Hauptansprüchen vorgestellt. Aspekte der Erfindung sind in den unabhängigen Ansprüchen zu finden. Vorteilhafte Ausgestaltungen ergeben sich aus den jeweiligen Unteransprüchen und der nachfolgenden Beschreibung.

Durch eine elektrische Parallelschaltung von mehreren Solarzellenmodulen auf eine erste Busleitung, auf der eine definierte und stabile elektrische Spannung für den Wechselrichter der Solaranlage anliegt, können verschiedene Solaranlagen bei gleichem Wechselrichter einfach in der Größe variiert werden. Ebenso können mehrere Speichermodule parallel auf eine zweite Busleitung geschaltet werden, wobei auf der zweiten Busleitung wiederum eine definierte elektrische Spannung anliegt. Dadurch kann eine Speicherkapazität der Solaranlage angepasst werden bzw. verschiedene Solaranlagen mit verschiedenen Speicherkapazitäten mit Gleichteilen erstellt werden. Auf den beiden Busleitungen kann die anliegende Spannung jeweils bedarfsgerecht eingestellt werden.

Es wird ein Fotovoltaikmodul mit folgenden Merkmalen vorgestellt:
einem Solargenerator zum Umwandeln von Strahlungsenergie in elektrische Energie, wobei der Solargenerator dazu ausgebildet ist, die elektrische Energie funktionsbedingt abhängig von der Strahlungsenergie als variable elektrische Spannung und/oder variabler elektrischer Strom bereitzustellen; und
einem Fotovoltaikregler, der mit dem Solargenerator verbunden ist und dazu ausgebildet ist, die elektrische Spannung und den elektrischen Strom leistungsoptimiert von dem Solargenerator abzunehmen und die elektrische Energie mit einer einstellbaren Fotovoltaik-Bus-Spannung an einer Fotovoltaik-Bus-Schnittstelle bereitzustellen.

Weiterhin wird ein Batteriemodul mit folgenden Merkmalen vorgestellt:
einem Energiespeicher zum Wandeln und/oder Speichern von elektrischer Energie in chemische Energie, wobei der Energiespeicher dazu ausgebildet ist, die elektrische Energie funktionsbedingt abhängig von einem Speicherzustand des Energiespeichers als variable elektrische Spannung und/oder variabler elektrischer Strom aufzunehmen und/oder abzugeben; und
einem Batterieladeregler, der mit dem Energiespeicher verbunden ist, wobei der Batterieladeregler dazu ausgebildet ist, zum Laden des Energiespeichers die variable elektrische Spannung und den variablen elektrischen Strom abhängig von dem Speicherzustand unter Verwendung einer einstellbaren Batterie-Bus-Spannung an einer Batterie-Bus-Schnittstelle bereitzustellen und dazu ausgebildet ist, zum Entladen des Energiespeichers an der Batterie-Bus-Schnittstelle die einstellbare Batterie-Bus-Spannung unter Verwendung der variablen elektrischen Spannung und des variablen elektrischen Stroms bereitzustellen.

Ferner wird ein Wechselrichtermodul mit folgenden Merkmalen vorgestellt:
einer Fotovoltaik-Bus-Schnittstelle, einer Batterie-Bus-Schnittstelle und einer Netz-Schnittstelle;
einem Spannungssteller, der mit der Fotovoltaik-Bus-Schnittstelle, der Batterie-Bus-Schnittstelle und einem Zwischenkreis verbunden ist, wobei der Spannungssteller dazu ausgebildet ist, eine an der Fotovoltaik-Bus-Schnittstelle anliegende einstellbare Fotovoltaik-Bus-Spannung in eine wählbare Zwischenkreis-Spannung des Zwischenkreises und/oder die Zwischenkreis-Spannung in eine an der Batterie-Bus-Schnittstelle anliegende einstellbare Batterie-Bus-Spannung und/oder die Batterie-Bus-Spannung in die Zwischenkreis-Spannung; und
einem Wechselrichter, der mit dem Zwischenkreis und der Netz-Schnittstelle verbunden ist, wobei der Wechselrichter dazu ausgebildet ist, die Zwischenkreis-Spannung in eine an der Netz-Schittstelle vorgegebene Netz-Wechselspannung und/oder die Netz-Wechselspannung in die Zwischenkreis-Spannung zu wandeln.
Des Weiteren wird ein modulares Fotovoltaiksystem mit folgenden Merkmalen vorgestellt:
   zumindest einem Fotovoltaikmodul gemäß einer Ausführungsform des hier vorgestellten Ansatzes;
   zumindest einem Batteriemodul gemäß einer Ausführungsform des hier vorgestellten Ansatzes; und/oder
   zumindest einem Wechselrichtermodul gemäß einer Ausführungsform des hier vorgestellten Ansatzes, wobei der Spannungssteller über die Fotovoltaik-Bus-Schnittstelle und einen Fotovoltaik-Bus mit dem zumindest einen Fotovoltaikmodul verbunden ist und der Spannungssteller über die Batterie-Bus-Schnittstelle und einen Batterie-Bus mit dem zumindest einen Batteriemodul verbunden ist.

Weiterhin wird ein Verfahren zum Betreiben eines Fotovoltaiksystems vorgestellt. Das Verfahren weist die folgenden Schritte auf:
Bereitstellen von Fotovoltaik-Energie auf einem Fotovoltaik-Bus unter Verwendung einer einstellbaren Fotovoltaik-Bus-Spannung und/oder Bereitstellen von Energie aus einem Batteriemodul auf einem Batterie-Bus unter Verwendung einer einstellbaren Batterie-Bus-Spannung, wenn weniger Fotovoltaik-Energie zur Verfügung steht, als in ein Netz einspeisbar ist;
Wandeln der Fotovoltaik-Bus-Spannung in eine wählbare Zwischenkreis-Spannung eines Zwischenkreises und/oder Wandeln der Batterie-Bus-Spannung in die Zwischenkreis-Spannung, wenn weniger Fotovoltaik-Energie zur Verfügung steht, als in das Netz einspeisbar ist und/oder Wandeln der Zwischenkreis-Spannung in die Batterie-Bus-Spannung des Batterie-Busses, wenn mehr Fotovoltaik-Energie zur Verfügung steht, als in das Netz einspeisbar ist und/oder Wandeln der Zwischenkreis-Spannung in eine vorgegebene Netz-Wechselspannung des Netzes;
Einspeisen von Fotovoltaik-Energie in das Netz unter Verwendung der Netz-Wechselspannung; und/oder
Speichern von Energie in zumindest einem der an den Batterie-Bus angeschlossenen Batteriemodule, wenn mehr Fotovoltaik-Energie zur Verfügung steht, als in das Netz einspeisbar ist.

Unter einem Solargenerator kann eine Gruppe von Solarzellen verstanden werden, die in einem Rahmen zusammengefasst ist. Ein Fotovoltaikregler kann ein Maximum-Power-Point Regler sein, der einen regelbaren Ausgang aufweist. Eine Fotovoltaik-Bus-Spannung kann eine Gleichspannung sein. Ein Energiespeicher kann ein Akkumulator sein. Ein Spannungssteller kann dazu ausgebildet sein, eine erste Gleichspannung in eine zweite Gleichspannung zu wandeln. Eine Batterie-Bus-Spannung kann eine Gleichspannung sein. Eine Zwischenkreis-Spannung kann eine Gleichspannung sein.

Das Verfahren kann einen Schritt des Wandelns aufweisen, in dem die Netz-Wechselspannung in die Zwischenkreis-Spannung gewandelt wird, wenn weniger Fotovoltaik-Energie zur Verfügung steht, als zum Laden der Batterie benötigt wird. Damit kann eine Energiereserve angelegt werden.

Das Fotovoltaiksystem kann ein Steuergerät aufweisen, das mit dem Fotovoltaik-Bus und/oder dem Batterie-Bus verbunden ist, wobei das Steuergerät dazu ausgebildet ist, über ein Kommunikationsprotokoll mit dem Fotovoltaikmodul und/oder dem Batteriemodul und/oder dem Wechselrichtermodul zu kommunizieren, um die Fotovoltaik-Bus-Spannung und/oder die Batterie-Bus-Spannung und/oder die Zwischenkreis-Spannung anzupassen.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Der hier vorgestellte Ansatz wird nachstehend anhand der beigefügten Zeichnungen beispielhaft näher erläutert. Es zeigen:
- Fig. 1: ein Blockschaltbild eines Gleichstromspeichersystems für Fotovoltaik;
- Fig. 2: ein Blockschaltbild eines nachgerüsteten Gleichstromspeichersystems für Fotovoltaik;
- Fig. 3: ein Blockschaltbild eines Wechselstromspeichersystems für Fotovoltaik beim Laden;
- Fig. 4: ein Blockschaltbild eines Wechselstromspeichersystems für Fotovoltaik beim Entladen;
- Fig. 5: ein Blockschaltbild eines Fotovoltaiksystems gemäß einem Ausführungsbeispiel der vorliegenden Erfindung; und
- Fig. 6: ein Ablaufdiagramm eines Verfahrens zum Betreiben eines Fotovoltaiksystems gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

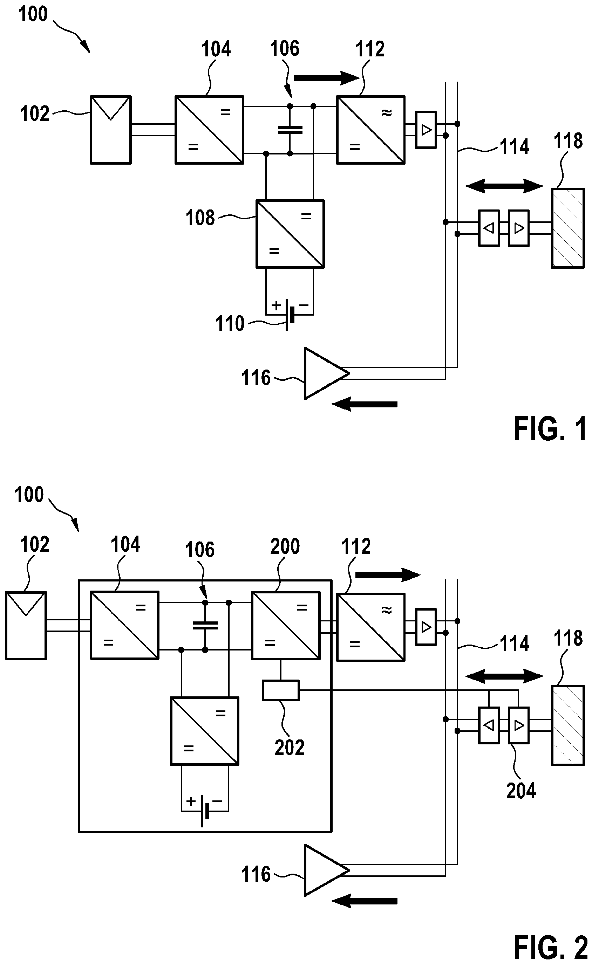

Fig. 1 zeigt ein Blockschaltbild eines Gleichstromspeichersystems 100 für Fotovoltaik. Das Gleichstromspeichersystem 100 ist mit zumindest einem Solargenerator 102 verbunden. Das Gleichstromspeichersystem 100 weist einen Fotovoltaikregler 104, einen Zwischenkreis 106, einen Batterieladeregler 108, zumindest eine Batterie 110 und einen Wechselrichter 112 auf. Das Gleichstromspeichersystem 100 ist an ein Hausnetz 114 angeschlossen. An dem Hausnetz 114 ist ein Haushalt 116 als Verbraucher angeschlossen. Das Hausnetz 114 ist mit einem übergeordneten Stromnetz 118 verbunden. Der Solargenerator 102 kann als PV (PhotoVoltaik) Modul 102 bezeichnet werden. Der Fotovoltaikregler 104 kann als MPP (Maximum Power Point) Tracker 104 bezeichnet werden. Der Solargenerator 102 ist mit dem Fotovoltaikregler 104 verbunden. Der Solargenerator 102 stellt abhängig von einer einfallenden Strahlungsintensität elektrische Energie in Form von Strom und Spannung zur Verfügung. Dabei ergibt sich abhängig von der jeweiligen Strahlungsintensität ein Spannungswert, an dem eine von dem Solargenerator 102 bereitgestellte elektrische Leistung maximal ist. Der Fotovoltaikregler 104 regelt die elektrische Spannung, bei der die Leistung abgenommen wird im Allgemeinen auf den Spannungswert mit der aktuell maximalen Leistung. Der Fotovoltaikregler 104 ist an den Zwischenkreis 106 angeschlossen. Der Zwischenkreis wird mit einer vorgegebenen Zwischenkreisspannung betrieben. Der Fotovoltaikregler 104 speist die von dem Solargenerator bereitgestellte Energie mit der Zwischenkreisspannung in den Zwischenkreis 106 ein. Der Batterieladeregler 108 ist ebenfalls an den Zwischenkreis 106 angeschlossen. Die Batterie 110 ist mit dem Batterieladeregler 108 verbunden. Der Wechselrichter 112 ist ebenfalls mit dem Zwischenkreis 106 verbunden. Der Wechselrichter 112 ist an das Hausnetz 114 angeschlossen. Der Haushalt 116 verbraucht Energie aus dem Hausnetz 114. Solange der Energiebedarf des Haushalts 116 durch das Gleichstromspeichersystem 100 gedeckt werden kann, wird keine Energie aus dem Stromnetz 118 bezogen. Verbraucht der Haushalt 116 mehr Energie, so wird die fehlende Energie aus dem Stromnetz 118 bezogen. Verbraucht der Haushalt 116 weniger Energie, als das Gleichstromspeichersystem 100 momentan bereitstellt, so wird der Überschuss in der Batterie 110 gespeichert oder in das Stromnetz 118 eingespeist.

In Fig. 1 ist der Betrieb eines DC (Direct Current; Gleichstrom)-Systems gezeigt. Der Wechselrichter wird entsprechend der im Haushalt vorhandenen Lasten geregelt und speist nur so viel Leistung ins Netz, wie aktuell verbraucht wird.

Fig. 2 zeigt ein Blockschaltbild eines nachgerüsteten Gleichstromspeichersystems 100 für Fotovoltaik. Das nachgerüstete Gleichstromspeichersystem 100 entspricht im Wesentlichen dem Gleichstromspeichersystem in Fig. 1. Im Gegensatz dazu weist das Gleichstromspeichersystem 100 einen Leistungssteller 200 auf, der anstatt des Wechselrichters 112 mit dem Zwischenkreis verbunden ist. Damit ist der Leitungssteller 200 zwischen dem Zwischenkreis 106 und dem Wechselrichter 112 geschaltet. Das Gleichstromspeichersystem 100 ist also zwischen dem Solargenerator 102 und dem Wechselrichter 112 geschaltet. Der Leistungssteller 200 wird von einem Steuergerät 202 angesteuert und wirkt als virtueller Solargenerator, um dem Wechselrichter 112 eine bedarfsgerechte Spannung und einen bedarfsgerechten Strom bereitzustellen. Dazu wird an einer Schnittstelle 204 zwischen dem Hausnetz 114 und dem Stromnetz 118 ein aktueller Energiebedarf des Haushalts 116 ermittelt.

In Fig. 2 ist eine schematische Darstellung eine PV-DC-Systems gezeigt. Das System wird zwischen einem Wechselrichter und einer PV-Anlage installiert. Das System verfügt über einen eigenen MPP-Tracker, um den optimalen Arbeitspunkt des Solargenerators einzustellen. Der Batterieladeregler dient zur Be- und Entladung der Batterie. Der virtuelle PV-Generator erzeugt eine Ul (Spannung-Strom) -Kennlinie, die einem PV-Generator mit einer Zielleistung entspricht, sodass der ursprüngliche Wechselrichter sich auf die Zielleistung einregelt.

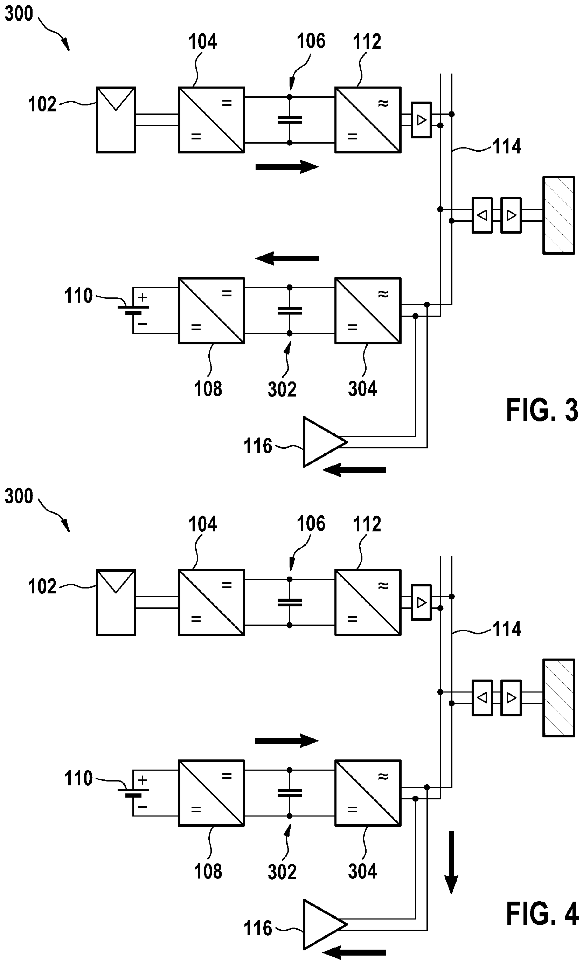

Fig. 3 zeigt ein Blockschaltbild eines Wechselstromspeichersystems 300 für Fotovoltaik beim Laden. Das Wechselstromspeichersystem 300 ist wie in Fig. 1 das Gleichstromspeichersystem mit zumindest einem Solargenerator verbunden. Wie in Fig. 1 weist das Wechselstromspeichersystem 300 einen Fotovoltaikregler 104, einen Batterieladeregler 108 und zumindest einen Energiespeicher 110 auf. Weiterhin weist das Wechselstromspeichersystem 300 einen ersten Zwischenkreis 106 und einen zweiten Zwischenkreis 302 sowie einen ersten Wechselrichter 112 und einen zweiten Wechselrichter 304 auf. Beide Wechselrichter 112, 304 sind mit dem Hausnetz 114 verbunden. Der erste Zwischenkreis 106 ist zwischen dem Fotovoltaikregler 104 und dem ersten Wechselrichter 112 geschalten. Der zweite Zwischenkreis 302 ist zwischen den Batterieladeregler 108 und den zweiten Wechselrichter 304 geschalten. Damit weist das Wechselstromspeichersystem 300 zwei räumlich voneinander getrennte Teilsysteme auf, die über das Hausnetz 114 miteinander verbunden sind. Im hier dargestellten Zustand wird von dem Solargenerator 102 über den Fotovoltaikregler 104 und den ersten Wechselrichter 112 mehr Leistung bereitgestellt, als der Haushalt 116 momentan benötigt. Deshalb wird der Leistungsüberschuss über den zweiten Wechselrichter 304 und den Batterieladeregler 108 in die Batterie 110 geladen.

In Fig. 3 ist der Betrieb eines AC (Alternating Current; Wechselstrom) -Systems als Nulleinspeiser gezeigt. Der Eigenverbrauch erfolgt über die Be- und Entladung der Batterie unabhängig davon, ob im Haushalt Strom genutzt wird oder nicht. Die Entladung der Batterie erfolgt beim Nulleinspeiser darüber, dass Verbraucher direkt vom Speichersystem aus versorgt werden. Eine Auslegung als Volleinspeiser ist ebenso möglich. Dann ist der Betrieb analog zum DC-System zu sehen.

Fig. 4 zeigt ein Blockschaltbild eines Wechselstromspeichersystems 300 für Fotovoltaik beim Entladen. Das Wechselstromspeichersystem 300 entspricht dem Wechselstromspeichersystem in Fig. 3. Hier wird gerade keine Leistung von dem Solargenerator 102 bereitgestellt. Deshalb wird die von dem Haushalt 116 gerade benötigte Leistung von der Batterie 110 über den Batterieladeregler 108 und den zweiten Wechselrichter 304 bereitgestellt. Und fließt über das Hausnetz 114 an die Verbraucher im Haushalt 116.

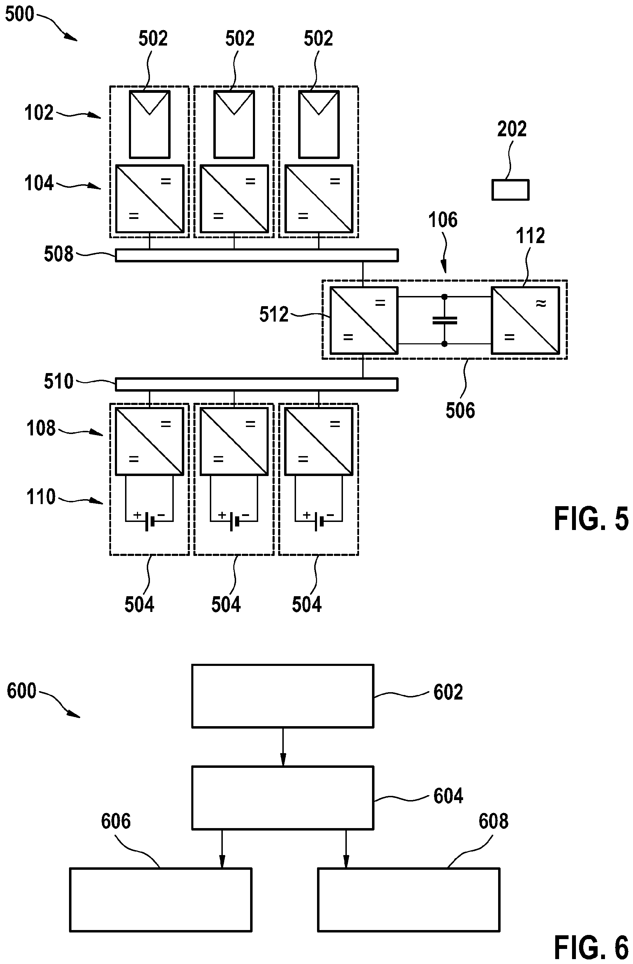

Fig. 5 zeigt ein Blockschaltbild eines Fotovoltaiksystems 500 gemäß einem Ausführungsbeispiel der vorliegenden Erfindung. Das Fotovoltaiksystem 500 weist hier drei zu jeweils einer logischen Einheit verschaltete Fotovoltaikmodule 502 bzw. MPP Module 502, drei zu einer logischen Einheit verschaltete Batteriemodule 504 und ein Wechselrichtermodul 506 bzw. Inverter-Battery-Converter Module auf. Die Fotovoltaikmodule 502 sind über einen Fotovoltaik-Bus 508 bzw. PV-DC Bus mit 350 V bis 1000 V mit dem Wechselrichtermodul 506 verbunden. Die Batteriemodule 504 sind über einen Batterie-Bus 510 bzw. Battery-DC Bus mit 350 V bis 1000 V mit dem Wechselrichtermodul 506 verbunden.

Die Fotovoltaikmodule 502 weisen je einen Solargenerator 102 und einen Fotovoltaikregler 104 auf. Der Solargenerator 102 ist mit dem Fotovoltaikregler 104 verbunden. Der Fotovoltaikregler 104 ist mit dem Fotovoltaik-Bus 508 verbunden. Der Solargenerator 102 ist dazu ausgebildet, Strahlungsenergie in elektrische Energie umzuwandeln. Dabei ist der der Solargenerator 102 dazu ausgebildet, die elektrische Energie funktionsbedingt abhängig von der Strahlungsenergie als variable elektrische Spannung und variablen elektrischen Strom bereitzustellen. Der Fotovoltaikregler 104 ist dazu ausgebildet ist, die elektrische Spannung und den elektrischen Strom leistungsoptimiert von dem Solargenerator 102 abzunehmen und die elektrische Energie mit einer einstellbaren Fotovoltaik-Bus-Spannung an einer Fotovoltaik-Bus-Schnittstelle auf dem Fotovoltaik-Bus 508 bereitzustellen.

Die Batteriemodule 504 weisen je einen Energiespeicher 110 und einen Batterieladeregler 108 bzw. Battery Converter auf. Der Energiespeicher 110 ist mit dem Batterieladeregler 108 verbunden. Der Batterieladeregler 108 ist mit dem Batterie-Bus 510 verbunden. Der Energiespeicher 110 ist zum Speichern elektrischer Energie als chemische Energie ausgebildet. Dabei ist der Energiespeicher 110 dazu ausgebildet, die elektrische Energie funktionsbedingt abhängig von einem Speicherzustand des Energiespeichers 110 als variable elektrische Spannung und variabler elektrischer Strom aufzunehmen und/oder abzugeben. Der Batterieladeregler 108 ist dazu ausgebildet, zum Laden des Energiespeichers 110 die variable elektrische Spannung und den variablen elektrischen Strom abhängig von dem Speicherzustand unter Verwendung einer einstellbaren Batterie-Bus-Spannung an einer Batterie-Bus-Schnittstelle bereitzustellen. Ebenso ist der Batterieladeregler 108 dazu ausgebildet, zum Entladen des Energiespeichers 110 an der Batterie-Bus-Schnittstelle die einstellbare Batterie-Bus-Spannung unter Verwendung der variablen elektrischen Spannung und des variablen elektrischen Stroms bereitzustellen.

Das Wechselrichtermodul 506 weist eine Fotovoltaik-Bus-Schnittstelle, eine Batterie-Bus-Schnittstelle und eine Netz-Schnittstelle, einen Spannungssteller 512, einen Zwischenkreis 106 und einen Wechselrichter 112 auf. Der Spannungssteller 512 ist mit dem Fotovoltaik-Bus 508, dem Batterie-Bus 510 und dem Zwischenkreis 106 verbunden. Der Zwischenkreis 106 ist mit dem Wechselrichter 112 verbunden. Der Wechselrichter 112 weist die Netz-Schnittstelle auf. Der Spannungssteller 512 ist dazu ausgebildet, die an der Fotovoltaik-Bus-Schnittstelle anliegende einstellbare Fotovoltaik-Bus-Spannung in eine wählbare Zwischenkreis-Spannung des Zwischenkreises 106 zu wandeln. Ebenso ist der Spannungssteller dazu ausgebildet, die Zwischenkreis-Spannung in die an der Batterie-Bus-Schnittstelle anliegende einstellbare Batterie-Bus-Spannung zu wandeln. Ebenso ist der Spannungssteller 512 dazu ausgebildet, die Batterie-Bus-Spannung in die Zwischenkreis-Spannung zu wandeln.

In einem Ausführungsbeispiel ist der Spannungssteller dazu ausgebildet, die Fotovoltaik-Bus-Spannung in die Batterie-Bus-Spannung zu wandeln.

Der Wechselrichter 112 ist dazu ausgebildet, die Zwischenkreis-Spannung in eine an der Netz-Schittstelle vorgegebene Netz-Wechselspannung zu wandeln. Ebenso ist der Wechselrichter 112 dazu ausgebildet, die Netz-Wechselspannung in die Zwischenkreis-Spannung zu wandeln.

In einem Ausführungsbeispiel weist das Fotovoltaiksystem 500 ein Steuergerät 202 bzw. EMS (Element Management System) auf, das mit dem Fotovoltaik-Bus 508 und/oder dem Batterie-Bus 510 verbunden ist. Das Steuergerät 202 ist dazu ausgebildet, über ein Kommunikationsprotokoll mit den Fotovoltaikmodulen 502 und/oder den Batteriemodulen 504 und/oder dem Wechselrichtermodul 506 zu kommunizieren, um die Fotovoltaik-Bus-Spannung und/oder die Batterie-Bus-Spannung und/oder die Zwischenkreis-Spannung anzupassen.

In einem Ausführungsbeispiel kontrolliert und konfiguriert das EMS 202 Komponenten des Fotovoltaiksystems 500, zeigt einen Status des Fotovoltaiksystems 500 an und passt den Betriebsmodus des Fotovoltaiksystems 500 an verschiedene Anwendungsfälle an.

In einem Ausführungsbeispiel zeigt Fig. 5 einen modularen, integrierten Fotovoltaik (PV) Speicher.

PV Speichersysteme können als DC-gekoppelte Speichersysteme oder als ACgekoppelte Speichersysteme ausgeführt werden. Ebenso können alternative Topologien umgesetzt werden.

PV Speichersysteme speichern überschüssigen Solarstrom in eine Batterie ein. Die Batterie ist dabei in unterschiedlichen Verhältnissen in Reihe und/oder parallel geschaltet. Bei DC-gekoppelten Systemen werden hohe Batteriespannungen bevorzugt, wodurch alle Module eines Speicherblocks in Reihe geschaltet sind, sodass die Gesamtbatteriespannung möglichst nahe an der DC-Zwischenkreis Spannung liegt. Bei AC-Systemen kann ebenso vorgegangen werden, wobei hier vermehrt Kombinationen aus parallel geschalteten Blöcken, die aus in Serie geschalteten Blöcken bestehen, verwendet werden.

Das hier vorgestellte System ist einfach für unterschiedliche Anwendungsfälle anpassbar. Für die Batterien ist keine minimale und maximale Modulzahl gegeben, da die Batterie-Bus-Spannung unabhängig von dem Spannungsbereich der Batterien ist. Eine Erweiterung ist durch beliebige Schaltung von Batteriemodulen möglich.

Des Weiteren können alte Batteriemodule durch neue Module ausgetauscht werden, ohne dass die ältesten Batteriemodule dominieren. Somit kann direkt ein Mehrwert durch neue Module generiert werden.

Das Wechselrichtermodul und die MPP-Tracker der Fotovoltaikmodule sind in ihrem Leistungsbereich und Spannungsbereich variabel.

Das hier vorgestellte PV-Speichersystem kann variabel ausgelegt werden.

Strom-, Spannungs-, Leistungseigenschaften des MPP-Trackers können unmittelbar auf den zugeordneten Solargenerator ausgelegt werden. Strom-, Spannungs-, Leistungseigenschaften des Inverters, sowie die Zahl der Einspeisephasen können dem Verwendungszweck angepasst werden. Strom-, Spannungs-, Leistungseigenschaften des Batterieladereglers können unmittelbar auf den zugeordneten Energiespeicher ausgelegt werden. Strom-, Spannungs-, Leistungseigenschaften der Batterie sowie die Ladekapazität der Batterie können auf den zugeordneten Batterieladeregler ausgelegt werden.

Für jede Anwendung kann eine Anpassung des Systems erfolgen, da es ein modulares System ist. Diese Systemanpassung kann einfach skaliert und von jedem Anwender umgesetzt werden.

Ebenso kann das System auf ein bestimmtes Leistungsbündel bzw. mehrere Produktgruppen begrenzt werden.

Das hier vorgestellte System ist nachrüstbar und modular.

Das hier vorgestellte Konzept erlaubt eine einfache Anpassung an unterschiedliche Anwendungsfelder. Auch die Wartbarkeit wird erhöht, da einzelne Baugruppen leicht ausgetauscht werden können. Durch die Skalierbarkeit sind entsprechende Kostenvorteile realisierbar, da mit Gleichteilen gearbeitet werden kann.

Das System arbeitet mit zwei DC-Bussen, die über einen DC/DC-Steller mit dem Zwischenkreis des Wechselrichters verbunden sind. Der erste DC-Bus verbindet die MPP-Tracker. Hier kann eine unterschiedliche Anzahl von MPP-Trackern auf den Bus angeordnet werden. Somit ist das System anpassbar.

Auf dem zweiten DC-Bus sind verschiedene Batteriemodule mit je einem integrierten DC/DC-Steller angeschlossen. An diesen beiden Bussen sind ein oder mehrere Inverter-Battery-Converter Module angeschlossen. Hier kann auf eine Modularität dieser beiden Entitäten verzichtet werden, da die Batterie Be- oder Entladeleistung an die Einspeiseleistung des Wechselrichters angeglichen werden kann.

Das übergeordnete EMS regelt die Konfiguration des Gesamtsystems und dient als Kontroller für die jeweilige Betriebsführung.

In seiner Funktion arbeitet das System ähnlich wie ein DC-gekoppeltes PV-Speichersystem, das beispielsweise in Fig. 1 dargestellt ist, d. h., es regelt im Eigenverbrauchsmodus die Einspeisung des Wechselrichters entsprechend der im Haus benötigten Lasten.

In einem Ausführungsbeispiel ist der Inverter bi-direktional ausgerichtet. Dadurch kann das System Netzstrom in die Batterie lagern. Beispielsweise kann nach einem Stromausfall die Notstromreserve aufgefüllt werden. Ebenso können netzstützende Verfahren zur Anwendung kommen. Das System kann am Energie- oder Leistungsmarkt teilnehmen. Weiterhin können günstige Stromtarife genutzt werden.

In einem Ausführungsbeispiel ist auf den Modulen Leistungselektronik verbaut.

Der hier vorgestellte Ansatz kann auf andere Speicherprojekte übertragen werden. Insbesondere ist eine Übertragung des Ansatzes auf Anwendungen im Bereich der Elektromobilität möglich.

Fig. 6 zeigt ein Ablaufdiagramm eines Verfahrens 600 zum Betreiben eines Fotovoltaiksystems gemäß einem Ausführungsbeispiel der vorliegenden Erfindung. Das Verfahren 600 weist einen Schritt 602 des Bereitstellens, einen Schritt 604 des Wandelns, einen Schritt 606 des Einspeisens und einen Schritt 608 des Speicherns auf. Das Verfahren 600 ist auf einem System, wie in Fig. 5 ausführbar. Im Schritt 602 des Bereitstellens wird Fotovoltaik-Energie unter Verwendung einer einstellbaren Fotovoltaik-Bus-Spannung auf dem Fotovoltaik-Bus bereitgestellt. Alternativ oder ergänzend wird im Schritt 602 des Bereitstellens Energie aus dem Batteriemodul unter Verwendung einer einstellbaren Batterie-Bus-Spannung über den Batterie-Bus bereitgestellt, wenn weniger Fotovoltaik-Energie zur Verfügung steht, als in das Netz einspeisbar ist. Im Schritt 604 des Wandelns wird die Fotovoltaik-Bus-Spannung in eine wählbare Zwischenkreis-Spannung des Zwischenkreises gewandelt. Alternativ oder ergänzend wird die Zwischenkreis-Spannung in eine vorgegebene Netz-Wechselspannung des Netzes gewandelt. Alternativ oder ergänzend wird die Zwischenkreis-Spannung in die Batterie-Bus-Spannung des Batterie-Busses gewandelt, wenn mehr Fotovoltaik-Energie zur Verfügung steht, als in das Netz einspeisbar ist. Alternativ oder ergänzend wird die Batterie-Bus-Spannung in die Zwischenkreis-Spannung gewandelt, wenn weniger Fotovoltaik-Energie zur Verfügung steht, als in das Netz einspeisbar ist. Im Schritt 606 des Einspeisens wird die Fotovoltaik-Energie unter Verwendung der Netz-Wechselspannung in das Netz eingespeist. Im Schritt 608 des Speicherns wird Energie in zumindest einem der an den Batterie-Bus angeschlossenen Batteriemodule gespeichert, wenn mehr Fotovoltaik-Energie zur Verfügung steht, als in das Netz einspeisbar ist.

In einem Ausführungsbeispiel wird im Schritt 604 des Wandelns die Netz-Wechselspannung in die Zwischenkreis-Spannung gewandelt, wenn weniger Fotovoltaik-Energie zur Verfügung steht, als zum Laden der Batterie benötigt wird.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Wechselrichtermodul (506) mit folgenden Merkmalen:
einer Fotovoltaik-Bus-Schnittstelle, einer Batterie-Bus-Schnittstelle und einer Netz-Schnittstelle;
einem Spannungssteller (512), der über separate Anschlüsse mit der Fotovoltaik-Bus-Schnittstelle, der Batterie-Bus-Schnittstelle und einem Zwischenkreis (106) verbunden ist,
wobei der Spannungssteller (512) dazu ausgebildet ist, eine an der Fotovoltaik-Bus-Schnittstelle anliegende einstellbare Fotovoltaik-Bus-Spannung in eine wählbare Zwischenkreis-Spannung des Zwischenkreises (106) und die Zwischenkreis-Spannung in eine an der Batterie-Bus-Schnittstelle anliegende einstellbare Batterie-Bus-Spannung und die Batterie-Bus-Spannung in die Zwischenkreis-Spannung zu wandeln; und
einem Wechselrichter (112), der mit dem Zwischenkreis (106) und der Netz-Schnittstelle verbunden ist, wobei der Wechselrichter (112) dazu ausgebildet ist, die Zwischenkreis-Spannung in eine an der Netz-Schnittstelle vorgegebene Netz-Wechselspannung und die Netz-Wechselspannung in die Zwischenkreis-Spannung zu wandeln.

2. Fotovoltaiksystem (500) mit folgenden Merkmalen:
zumindest einem Fotovoltaikmodul (502);
zumindest einem Batteriemodul (504); und
einem Wechselrichtermodul (506) gemäß Anspruch 1, wobei der Spannungssteller (512) über die Fotovoltaik-Bus-Schnittstelle und einen Fotovoltaik-Bus (508) mit dem zumindest einen Fotovoltaikmodul (502) verbunden ist und der Spannungssteller (512) über die Batterie-Bus-Schnittstelle und einen Batterie-Bus (510) mit dem zumindest einen Batteriemodul (504) verbunden ist.

3. Fotovoltaiksystem (500) gemäß Anspruch 2, wobei das zumindest eine Fotovoltaikmodul (502) folgende Merkmale aufweist:
einen Solargenerator (102) zum Umwandeln von Strahlungsenergie in elektrische Energie,
wobei der Solargenerator (102) dazu ausgebildet ist, die elektrische Energie funktionsbedingt abhängig von der Strahlungsenergie als variable elektrische Spannung und/oder variabler elektrischer Strom bereitzustellen; und
einen Fotovoltaikregler (104), der mit dem Solargenerator (102) verbunden ist und dazu ausgebildet ist, die elektrische Spannung und den elektrischen Strom leistungsoptimiert von dem Solargenerator (102) abzunehmen und die elektrische Energie mit einer einstellbaren Fotovoltaik-Bus-Spannung an einer Fotovoltaik-Bus-Schnittstelle bereitzustellen.

4. Fotovoltaiksystem (500) gemäß Anspruch 2 oder 3, wobei das zumindest eine Batteriemodul (504) folgende Merkmale aufweist:
einen Energiespeicher (110) zum Speichern und/oder Wandeln von elektrischer Energie in chemische Energie, wobei der Energiespeicher (110) dazu ausgebildet ist, die elektrische Energie funktionsbedingt abhängig von einem Speicherzustand des Energiespeichers (110) als variable elektrische Spannung und/oder variabler elektrischer Strom aufzunehmen und/oder abzugeben; und
einen Batterieladeregler (108), der mit dem Energiespeicher (110) verbunden ist, wobei der Batterieladeregler (108) dazu ausgebildet ist, zum Laden des Energiespeichers (110) die variable elektrische Spannung und den variablen elektrischen Strom abhängig von dem Speicherzustand unter Verwendung einer einstellbaren Batterie-Bus-Spannung an einer Batterie-Bus-Schnittstelle bereitzustellen und dazu ausgebildet ist, zum Entladen des Energiespeichers (110) an der Batterie-Bus-Schnittstelle die einstellbare Batterie-Bus-Spannung unter Verwendung der variablen elektrischen Spannung und des variablen elektrischen Stroms bereitzustellen.

5. Fotovoltaiksystem (500) gemäß einem der Ansprüche 2 bis 4, mit einem Steuergerät (202), das mit dem Fotovoltaik-Bus (508) und/oder dem Batterie-Bus (510) verbunden ist, wobei das Steuergerät (202) dazu ausgebildet ist, über ein Kommunikationsprotokoll mit dem Fotovoltaikmodul (502) und/oder dem Batteriemodul (504) und/oder dem Wechselrichtermodul (506) zu kommunizieren, um die Fotovoltaik-Bus-Spannung und/oder die Batterie-Bus-Spannung und/oder die Zwischenkreis-Spannung anzupassen.

6. Verfahren (600) zum Betreiben eines Fotovoltaiksystems (500) gemäß einem der Ansprüche 2 bis 5, wobei das Verfahren (600) die folgenden Schritte aufweist:
Bereitstellen (602) von Fotovoltaik-Energie auf einem Fotovoltaik-Bus (508) unter Verwendung einer einstellbaren Fotovoltaik-Bus-Spannung und Bereitstellen (602) von Energie aus einem Batteriemodul (504) auf einem Batterie-Bus (510) unter Verwendung einer einstellbaren Batterie-Bus-Spannung, wenn weniger Fotovoltaik-Energie zur Verfügung steht, als in ein Netz (114) einspeisbar ist;
Wandeln (604) der Fotovoltaik-Bus-Spannung in eine wählbare Zwischenkreis-Spannung eines Zwischenkreises (106) und Wandeln (604) der Batterie-Bus-Spannung in die Zwischenkreis-Spannung, wenn weniger Fotovoltaik-Energie zur Verfügung steht, als in das Netz (114) einspeisbar ist und Wandeln (604) der Zwischenkreis-Spannung in die Batterie-Bus-Spannung des Batterie-Busses (510), wenn mehr Fotovoltaik-Energie zur Verfügung steht, als in das Netz (114) einspeisbar ist und Wandeln (604) der Zwischenkreis-Spannung in eine vorgegebene Netz-Wechselspannung des Netzes (114);
Einspeisen (606) von Fotovoltaik-Energie in das Netz (114) unter Verwendung der Netz-Wechselspannung; und
Speichern (608) von Energie in zumindest einem der an den Batterie-Bus (510) angeschlossenen Batteriemodule (504), wenn mehr Fotovoltaik-Energie zur Verfügung steht, als in das Netz (114) einspeisbar ist.

7. Verfahren (600) gemäß Anspruch 6, bei dem im Schritt (604) des Wandelns die Netz-Wechselspannung in die Zwischenkreis-Spannung gewandelt wird, wenn weniger Fotovoltaik-Energie zur Verfügung steht, als zum Laden der Batterie (110) benötigt wird.

## Claims

1. An Inverter module (506) comprising the following features:
a photovoltaic bus interface, a battery bus interface and a mains interface;
a voltage regulator (512) connected via separate terminals to said photovoltaic bus interface, said battery bus interface and an intermediate circuit (106), said voltage regulator (512) being configured to convert an adjustable photovoltaic bus voltage present at said photovoltaic bus interface to a selectable intermediate circuit voltage of said intermediate circuit (106) and said intermediate circuit voltage to an adjustable battery bus voltage present at said battery bus interface and said battery bus voltage to said intermediate circuit voltage; and
an inverter (112) connected to the Intermediate circuit (106) and the mains interface, the inverter (112) being adapted to convert the intermediate circuit voltage to a mains alternating voltage provided at the mains interface and the mains alternating voltage to the intermediate circuit voltage.

2. A photovoltaic system (500) comprising the following features:
at least one photovoltaic module (502);
at least one battery module (504); and
an inverter module (506) according to claim 1, wherein the voltage regulator (512) is connected to the at least one photovoltaic module (502) via the photovoltaic bus interface and a photovoltaic bus (508), and the voltage regulator (512) is connected to the at least one battery module (504) via the battery bus interface and a battery bus (510).

3. The photovoltaic system (500) according to claim 2, wherein the at least one photovoltaic module (502) comprises the following features:
a solar generator (102) for converting radiant energy into electrical energy, wherein the solar generator (102) is adapted to functionally provide the electrical energy as a variable electrical voltage and/or variable electrical current depending on the radiant energy; and
a photovoltaic controller (104) connected to the solar generator (102) and adapted to take the electrical voltage and current from the solar generator (102) in a power optimized manner and to provide the electrical energy with an adjustable photovoltaic bus voltage at a photovoltaic bus interface.

4. The photovoltaic system (500) according to claim 2 or 3, wherein the at least one battery module (504) comprises the following features:
an energy storage device (110) for storing and/or converting electrical energy into chemical energy, the energy storage device (110) being adapted to receive and/or deliver the electrical energy functionally as a variable electrical voltage and/or variable electrical current depending on a storage state of the energy storage device (110); and
a battery charge controller (108) connected to the energy storage device (110), the battery charge controller (108) being adapted to provide the variable electrical voltage and the variable electrical current for charging the energy storage device (110) depending on the storage state using an adjustable battery bus voltage at a battery bus interface and being adapted to provide the adjustable battery bus voltage using the variable electrical voltage and the variable electrical current for discharging the energy storage device (110) at the battery bus interface.

5. A photovoltaic system (500) according to any one of claims 2 to 4, comprising a controller (202) connected to the photovoltaic bus (508) and/or the battery bus (510), the controller (202) being adapted to communicate via a communication protocol with the photovoltaic module (502) and/or the battery module (504) and/or the inverter module (506) to adjust the photovoltaic bus voltage and/or the battery bus voltage and/or the intermediate circuit voltage.

6. A method (600) for operating a photovoltaic system (500) according to any one of claims 2 to 5, the method (600) comprising the steps of:
providing (602) photovoltaic energy on a photovoltaic bus (508) using an adjustable photovoltaic bus voltage and providing (602) energy from a battery module (504) on a battery bus (510) using an adjustable battery bus voltage when less photovoltaic energy is available than is feedable into a network (114);
converting (604) the photovoltaic bus voltage to a selectable intermediate circuit voltage of an intermediate circuit (106) and converting (604) the battery bus voltage to the intermediate circuit voltage when less photovoltaic energy is available, than is feedable into said network (114), and converting (604) said intermediate circuit voltage to said battery bus voltage of said battery bus (510) when more photovoltaic energy is available than is feedable into said network (114), and converting (604) said intermediate circuit voltage to a predetermined mains alternating voltage of said network (114);
feeding (606) photovoltaic energy into the grid (114) using mains alternating voltage; and
storing (608) energy in at least one of the battery modules (504) connected to the battery bus (510) when more photovoltaic energy is available than is feedable into the network (114).

7. The method (600) according to claim 6, in which in the step (604) of converting, the AC mains voltage is converted to the intermediate circuit voltage when less photovoltaic energy is available than is required to charge the battery (110).

## Revendications

1. Module onduleur (506) ayant les caractéristiques suivantes :
une interface de bus photovoltaïque, une interface de bus de batterie et une interface de réseau ;
un contrôleur de tension (512) qui est relié par le biais de bornes séparées à l'interface de bus photovoltaïque, à l'interface de bus de batterie et à un circuit intermédiaire (106), le contrôleur de tension (512) étant configuré pour convertir une tension de bus photovoltaïque réglable, appliquée à l'interface de bus photovoltaïque, en une tension de circuit intermédiaire sélectionnable du circuit intermédiaire (106) et la tension de circuit intermédiaire en une tension de bus de batterie réglable appliquée à l'interface de bus de batterie et la tension de bus de batterie en la tension de circuit intermédiaire ; et
un onduleur (112) qui est relié au circuit intermédiaire (106) et à l'interface de réseau, l'onduleur (112) étant configuré pour convertir la tension de circuit intermédiaire en une tension alternative de réseau prédéfinie au niveau de l'interface de réseau et la tension alternative de réseau en la tension de circuit intermédiaire.

2. Système photovoltaïque (500) ayant les caractéristiques suivantes :
au moins un module photovoltaïque (502) ;
au moins un module de batterie (504) ; et
un module onduleur (506) selon la revendication 1, le contrôleur de tension (512) étant relié à l'au moins un module photovoltaïque (502) par le biais de l'interface de bus photovoltaïque et d'un bus photovoltaïque (508) et le contrôleur de tension (512) étant relié à l'au moins un module de batterie (504) par le biais de l'interface de bus de batterie et d'un bus de batterie (510) .

3. Système photovoltaïque (500) selon la revendication 2, l'au moins un module photovoltaïque (502) possédant les caractéristiques suivantes :
un générateur solaire (102) destiné à convertir l'énergie de rayonnement en énergie électrique, le générateur solaire (102) étant configuré pour fournir l'énergie électrique suivant la fonction, en fonction de l'énergie de rayonnement sous la forme d'une tension électrique variable et/ou d'un courant électrique variable ; et
un régulateur photovoltaïque (104) qui est relié au générateur solaire (102) et qui est configuré pour prélever la tension électrique et le courant électrique du générateur solaire (102) avec optimisation de la puissance et pour fournir l'énergie électrique avec une tension de bus photovoltaïque réglable sur une interface de bus photovoltaïque.

4. Système photovoltaïque (500) selon la revendication 2 ou 3, l'au moins un module de batterie (504) possédant les caractéristiques suivantes :
un accumulateur d'énergie (110) destiné à accumuler et/ou à convertir de l'énergie électrique en énergie chimique,
l'accumulateur d'énergie (110) étant configuré pour absorber et/ou délivrer l'énergie électrique suivant la fonction, en fonction d'un état d'accumulation de l'accumulateur d'énergie (110) sous la forme d'une tension électrique variable et/ou d'un courant électrique variable ; et
un régulateur de charge de batterie (108) qui est relié à l'accumulateur d'énergie (110), le régulateur de charge de batterie (108) étant configuré pour, en vue de charger l'accumulateur d'énergie (110), délivrer la tension électrique variable et le courant électrique variable en fonction de l'état d'accumulation en utilisant une tension de bus de batterie réglable au niveau d'une interface de bus de batterie et étant configuré pour, en vue de décharger l'accumulateur d'énergie (110), délivrer la tension de bus de batterie réglable au niveau de l'interface de bus de batterie en utilisant la tension électrique variable et le courant électrique variable.

5. Système photovoltaïque (500) selon l'une des revendications 2 à 4, comprenant un appareil de commande (202) qui est relié au bus photovoltaïque (508) et/ou au bus de batterie (510), l'appareil de commande (202) étant configuré pour communiquer avec le module photovoltaïque (502) et/ou le module de batterie (504) et/ou le module onduleur (506) par le biais d'un protocole de communication afin d'adapter la tension de bus photovoltaïque et/ou la tension de bus de batterie et/ou la tension de circuit intermédiaire.

6. Procédé (600) pour faire fonctionner un système photovoltaïque (500) selon l'une des revendications 2 à 5, le procédé (600) comprenant les étapes suivantes :
fourniture (602) d'énergie photovoltaïque sur le bus photovoltaïque (508) en utilisant la tension de bus photovoltaïque réglable et fourniture (602) d'énergie issue du module de batterie (504) sur le bus de batterie (510) en utilisant la tension de bus de batterie réglable lorsque la quantité d'énergie photovoltaïque disponible est inférieure à celle qui peut être injectée dans un réseau (114) ;
conversion (604) de la tension de bus photovoltaïque en la tension de circuit intermédiaire sélectionnable du circuit intermédiaire (106) et conversion (604) de la tension de bus de batterie en la tension de circuit intermédiaire lorsque la quantité d'énergie photovoltaïque disponible est inférieure à celle qui peut être injectée dans le réseau (114), et conversion (604) de la tension de circuit intermédiaire en la tension de bus de batterie du bus de batterie (510) lorsque la quantité d'énergie photovoltaïque disponible est supérieure à celle qui peut être injectée dans le réseau (114), et conversion (604) de la tension de circuit intermédiaire en la tension alternative de réseau prédéfinie du réseau (114) ;
injection (606) d'énergie photovoltaïque dans le réseau (114) en utilisant la tension alternative de réseau ; et accumulation (608) d'énergie dans au moins un des modules de batterie (504) raccordés au bus de batterie (510) lorsque la quantité d'énergie photovoltaïque disponible est supérieure à celle qui peut être injectée dans le réseau (114).

7. Procédé (600) selon la revendication 6, avec lequel à l'étape (604) de la conversion, la tension alternative de réseau est convertie en la tension de circuit intermédiaire lorsque la quantité d'énergie photovoltaïque disponible est inférieure à celle qui est nécessaire pour charger la batterie (110).
